# EUROPEAN PATENT APPLICATION

(11) **EP 4 606 579 A1**
(43) Date of publication of application: **27.08.2025**
(21) Application number: 25157418.2
(22) Date of filing: 12.02.2025
(51) Int. Cl.: B41J 2/14, B41J 2/16

(54) **LIQUID JETTING STRUCTURE BODY, LIQUID JETTING HEAD, LIQUID JETTING DEVICE, MANUFACTURING METHOD OF LIQUID JETTING STRUCTURE BODY, AND LAMINATE**

(30) Priority: 16.02.2024 JP 2024022314
(71) Applicant: FUJIFILM Corporation, Tokyo 106-8620 (JP)
(72) Inventor: YOKOUCHI, Tsutomu, Kanagawa (JP); KATAOKA, Shohei, Kanagawa (JP); TOKUOKA, Shinsuke, Kanagawa (JP); TAMAKI, Kenichiro, Kanagawa (JP); KOMATSU, Hiroshi, Kanagawa (JP)
(74) Representative: Klunker IP Patentanwälte PartG mbB

(57) **Abstract**

Provided are a liquid jetting structure body, a liquid jetting head, and a liquid jetting device, in which a jetting surface has excellent wipe resistance.

The liquid jetting structure body and its applications include a nozzle substrate on which a nozzle jetting a liquid is formed, in which a liquid-repellent layer is provided on a jetting surface of the nozzle substrate, and the liquid-repellent layer contains a compound having a hydrocarbon group having 8 or more carbon atoms.

## Description

### BACKGROUND OF THE INVENTION

### 1. Field of the Invention

The present disclosure relates to a liquid jetting structure body, a liquid jetting head, a liquid jetting device, a manufacturing method of a liquid jetting structure body, and a laminate.

### 2. Description of the Related Art

In general, a liquid jetting head typified by an ink jet head, which is mounted on an ink jet recording device, has a nozzle for jetting a liquid. The liquid is supplied from a liquid supply chamber to a liquid flow passage, and is jetted from a nozzle hole formed in the nozzle connected to the liquid flow passage.

For example, JP2014-166747A discloses a nozzle plate including a silicon substrate on which a nozzle is formed, a first organic film which is formed on the silicon substrate and does not contain a fluorine atom, an inorganic oxide film which is formed on the first organic film, and a second organic film which is formed on the inorganic oxide film and has a linear fluorosilane coupling agent as a raw material.

JP2010-214654A discloses a liquid-repellent treatment method for imparting liquid-repellency to a surface of a base material having a hole portion, the method including an organic film-forming step of forming an organic film on the surface of the base material and an inner wall surface of the hole portion, a protective member-forming step of forming a protective member on the organic film on the surface of the base material, an organic film-removing step of removing the organic film on the inner wall surface of the hole portion of the base material, a protective member-removing step of removing the protective member on the organic film on the surface of the base material, and a fluorination treatment step of subjecting the organic film on the surface of the base material to a fluorination treatment.

WO2021/199731A discloses a liquid jetting structure body including a nozzle substrate on which a nozzle for jetting a liquid is formed, and a flow passage substrate in which a liquid flow passage communicating with the nozzle is formed, in which a first layer, a second layer, and a liquid-repellent layer are provided in this order on a jetting surface of the nozzle substrate, the first layer and the second layer are provided in this order on an interior wall of the liquid flow passage, the first layer is a layer containing at least one selected from the group consisting of tantalum oxide, zirconium oxide, titanium oxide, and hafnium oxide, the second layer is a layer containing at least one selected from the group consisting of SiO₂, SiC, SiN, SiCN, and SiON, and the liquid-repellent layer contains a compound having a perfluoropolyether structure.

### SUMMARY OF THE INVENTION

Components contained in a liquid adhere to a jetting surface of a liquid jetting head as foreign substances due to drying after the liquid is jetted. In a case where a foreign substance adheres to the nozzle surface, jetting failure is likely to occur. Therefore, in a liquid jetting device, the foreign substance can be removed by regularly wiping the jetting surface of the liquid jetting head. However, durability of the jetting surface of the liquid jetting head may be reduced by the wiping, and durability against wiping (hereinafter, also referred to as "wipe resistance") is required.

The present disclosure has been made in view of such circumstances, and an object to be achieved by one embodiment of the present invention is to provide a liquid jetting structure body, a liquid jetting head, and a liquid jetting device, in which a jetting surface has excellent wipe resistance.

An object to be achieved by another embodiment of the present disclosure is to provide a laminate useful for the liquid jetting structure body having a jetting surface with excellent wipe resistance.

The present disclosure includes the following aspects.
<1> A liquid jetting structure body comprising:
   a nozzle substrate on which a nozzle jetting a liquid is formed,
   in which a liquid-repellent layer is provided on a jetting surface of the nozzle substrate, and
   the liquid-repellent layer contains a compound having a hydrocarbon group having 8 or more carbon atoms.
<2> The liquid jetting structure body according to <1>,
   in which the compound having a hydrocarbon group having 8 or more carbon atoms has a partial structure represented by Formula (1),

      L-Y-M-* ... (1)
   in Formula (1),
   L is a hydrocarbon group having 8 or more carbon atoms,
   Y is a single bond or a divalent linking group,
   M is a metalloid or a metal, and
   * means a bonding position to another structure.
<3> The liquid jetting structure body according to <1> or <2>,
   in which the hydrocarbon group having 8 or more carbon atoms is a linear alkyl group having 8 or more carbon atoms.
<4> The liquid jetting structure body according to <2>,
   in which Y in Formula (1) is a single bond.
<5> The liquid jetting structure body according to any one of <1> to <4>,
   in which an interlayer and the liquid-repellent layer are provided in this order on the jetting surface of the nozzle substrate.
<6> The liquid jetting structure body according to any one of <1> to <5>
   in which the interlayer is a layer containing at least one selected from the group consisting of tantalum oxide, zirconium oxide, titanium oxide, hafnium oxide, SiO₂, SiC, SiN, SiCN, and SiON.
<7> The liquid jetting structure body according to <5>,
   in which the interlayer consists of two layers, and
   a first interlayer, a second interlayer, and the liquid-repellent layer are provided in this order on the jetting surface.
<8> The liquid jetting structure body according to <7>,
   in which the first interlayer is a layer containing at least one selected from the group consisting of tantalum oxide, zirconium oxide, titanium oxide, and hafnium oxide, and
   the second interlayer is a layer containing at least one selected from the group consisting of SiO₂, SiC, SiN, SiCN, and SiON.
<9> A liquid jetting head comprising:
   the liquid jetting structure body according to any one of <1> to <8>; and
   a flow passage substrate in which a liquid flow passage communicating with the nozzle is formed.
<10> The liquid jetting head according to <9>, further comprising:
   a piezoelectric element.
<11> A liquid jetting device comprising:
   the liquid jetting head according to <9>;
   a transport unit transporting a base material; and
   a drying unit drying a liquid jetted onto the base material.
<12> A manufacturing method of a liquid jetting structure body, comprising:
   forming a liquid-repellent layer on a jetting surface of a nozzle substrate on which a nozzle jetting a liquid is formed using a composition for forming a liquid-repellent layer, containing a compound having a hydrocarbon group having 8 or more carbon atoms, by a vapor deposition method.
<13> A laminate comprising:
   a substrate; and
   a liquid-repellent layer disposed on the substrate,
   in which the liquid-repellent layer contains a compound having a hydrocarbon group having 8 or more carbon atoms.

According to one embodiment of the present disclosure, a liquid jetting structure body, a liquid jetting head, a liquid jetting device, and a manufacturing method of a liquid jetting structure body, in which a jetting surface has excellent wipe resistance, are provided.

According to another embodiment of the present disclosure, a laminate useful for the liquid jetting structure body having a jetting surface with excellent wipe resistance is provided.

### BRIEF DESCRIPTION OF THE DRAWINGS

Fig. 1 is a schematic cross-sectional view showing an embodiment of a liquid jetting head according to the present disclosure.
Fig. 2 is an enlarged view of a broken line frame A in Fig. 1.
Fig. 3 is a view showing a modification example of an interlayer.
Fig. 4 is a schematic cross-sectional view showing a modification example of the liquid jetting head according to the present disclosure.
Fig. 5 is a schematic cross-sectional view showing another embodiment of the liquid jetting head according to the present disclosure.

### DESCRIPTION OF THE PREFERRED EMBODIMENTS

Hereinafter, a liquid jetting structure body, a liquid jetting head, a liquid jetting device, a manufacturing method of a liquid jetting structure body, and a laminate according to the present disclosure will be described in detail.

The numerical ranges shown using "to" in the present disclosure indicate ranges including the numerical values described before and after "to" as the lower limits and the upper limits.

In the present disclosure, in a case where a plurality of substances corresponding to respective components in a composition are present, the amount of the respective components in the composition indicates the total amount of the plurality of substances present in the composition unless otherwise specified.

In a numerical range described in a stepwise manner in the present disclosure, an upper limit or a lower limit described in a certain numerical range may be replaced with an upper limit or a lower limit in another numerical range described in a stepwise manner or a value described in an example.

In the present disclosure, the meaning of the term "step" includes not only an independent step but also a step whose intended purpose is achieved even in a case where the step is not clearly distinguished from other steps.

In the present disclosure, a combination of preferred embodiments is a more preferred embodiment.

Each element in each drawing shown in the present disclosure is not necessarily an accurate scale, the main purpose is to clearly show the principle of the present disclosure, and some parts may be emphasized.

In the present disclosure, "liquid-repellent layer" refers to a layer having a contact angle of 60° or more with respect to water. The contact angle with respect to water is a value measured using a contact angle meter, for example, a fully automatic contact angle meter (product name "DM-701", manufactured by Kyowa Interface Science Co., Ltd.), under a condition of 25°C.

In the present disclosure, "jetting surface" means a surface of a nozzle substrate on a side from which a liquid is jetted in the liquid jetting structure body.

In the present disclosure, "interior wall of a liquid flow passage" means a surface of a flow passage substrate in which the liquid flow passage is formed. In addition, "interior wall of a nozzle" means a surface of a nozzle substrate in which the nozzle is formed.

### Liquid Jetting Structure Body

The liquid jetting structure body according to the present disclosure includes a nozzle substrate on which a nozzle jetting a liquid is formed, in which a liquid-repellent layer is provided on a jetting surface of the nozzle substrate, and the liquid-repellent layer contains a compound having a hydrocarbon group having 8 or more carbon atoms.

The liquid-repellent layer is located on an outermost surface of the nozzle substrate. That is, the liquid-repellent layer is the outermost layer in a plurality of layers provided on the nozzle substrate. Since the liquid jetting structure body according to the present disclosure has the liquid-repellent layer on the outermost surface of the nozzle substrate, antifouling property of the jetting surface is excellent.

In particular, in the liquid jetting structure body according to the present disclosure, since the liquid-repellent layer contains a compound having a hydrocarbon group having 8 or more carbon atoms, the jetting surface has excellent wipe resistance. It is considered that this is because durability of the liquid-repellent layer is improved by aggregation of the hydrocarbon group having 8 or more carbon atoms.

On the other hand, all liquid-repellent layers disclosed in JP2014-166747A, JP2010-214654A, and WO2021/199731A are fluorine-based liquid-repellent layers, and there is no description focusing on a liquid-repellent layer containing a compound having a hydrocarbon group having 8 or more carbon atoms.

Hereinafter, an embodiment of the liquid jetting structure body according to the present disclosure will be described with reference to the drawings showing an embodiment of the liquid jetting head according to the present disclosure.

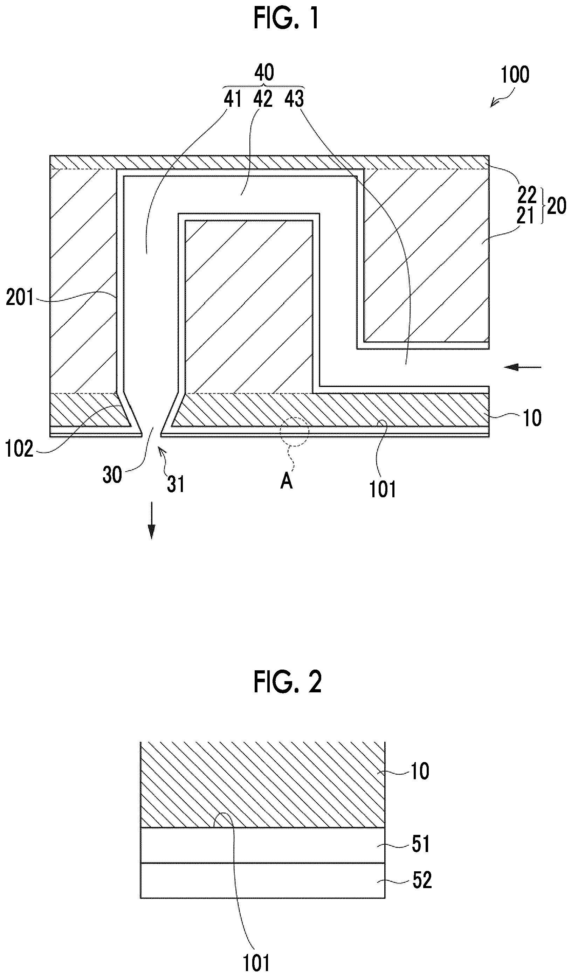

Fig. 1 is a cross-sectional view showing the embodiment of the liquid jetting head according to the present disclosure.

As shown in Fig. 1, a liquid jetting head 100 includes a liquid jetting structure body including a nozzle substrate 10 on which a nozzle 30 jetting a liquid is formed, and a flow passage substrate 20 in which a liquid flow passage 40 communicating with the nozzle 30 is formed. It is preferable that the nozzle substrate 10 and the flow passage substrate 20 are bonded to each other by adhesion or the like.

In the present disclosure, the liquid jetting structure body refers to a structure body including the nozzle substrate 10 on which a nozzle 30 jetting a liquid is formed, and a liquid-repellent layer described later. That is, the liquid jetting structure body is a part of the liquid jetting head.

The type of liquid supplied to the liquid jetting head 100 is not particularly limited. The liquid jetting head 100 can jet fine liquid droplets from the nozzle 30 by being incorporated into a liquid jetting device described later. It is preferable to use an ink as the liquid, and an image can be recorded by jetting fine ink droplets onto a base material.

The ink for recording an image is, for example, a liquid containing a coloring material, a solvent, and a surfactant. In addition, a pretreatment liquid may be jetted onto the base material in advance before the ink is jetted onto the base material, or a posttreatment liquid may be jetted after the ink is jetted. Therefore, examples of the liquid supplied to the liquid jetting head 100 include a pretreatment liquid and a posttreatment liquid, in addition to the ink. The pretreatment liquid and the posttreatment liquid are usually colorless liquids containing no coloring material.

In addition, the liquid supplied to the liquid jetting head 100 may be an acidic liquid or an alkaline liquid. Since the jetting surface and the inside of the flow passage of the liquid jetting head 100 have excellent alkali resistance, the liquid jetting head 100 is suitable for an alkaline liquid. In particular, the liquid jetting head 100 is suitable for a liquid having a pH of 8 to 11. The pH is a value measured at 25°C using a pH meter, and is, for example, a value measured using a product name "Handy pH meter" manufactured by Sato Keiryoki Mfg. Co., Ltd.

### Nozzle Substrate

The nozzle substrate 10 is, for example, a substrate made of silicon, and may be a single crystal silicon substrate or a polycrystalline silicon substrate. The nozzle 30 jetting a liquid is formed in the nozzle substrate 10.

The nozzle 30 is a hole penetrating the nozzle substrate 10, and is formed by, for example, dry etching. It is preferable that a plurality of nozzles 30 are formed in the nozzle substrate 10. A shape of the nozzle 30 is not particularly limited, but from the viewpoint of controlling a jetting direction of the liquid, a tapered shape in which a diameter decreases in the direction in which the liquid is jetted is preferable. A hole diameter of the nozzle 30 on the side from which the liquid is jetted, that is, a hole diameter of a nozzle opening 31 can be appropriately adjusted. In a case where the liquid jetting head 100 is used as an ink jet head, the hole diameter of the nozzle opening 31 is, for example, 10 µm to 30 µm.

A thickness of the nozzle substrate 10 corresponds to a length of the nozzle 30, and is preferably 10 µm to 100 µm and more preferably 20 µm to 60 µm.

Fig. 2 is an enlarged view of a broken line frame A in Fig. 1.

As shown in Fig. 2, an interlayer 51 and a liquid-repellent layer 52 are provided in this order on a jetting surface 101 of the nozzle substrate 10.

In a case where the interlayer 51 is provided between the nozzle substrate and the liquid-repellent layer, it is possible to suppress corrosion of the nozzle substrate 10 due to deterioration of the liquid-repellent layer 52.

The interlayer 51 is preferably a layer containing at least one selected from the group consisting of tantalum oxide, zirconium oxide, titanium oxide, hafnium oxide, SiO₂, SiC, SiN, SiCN, and SiON.

At least one selected from the group consisting of tantalum oxide, zirconium oxide, titanium oxide, and hafnium oxide (preferably, tantalum oxide, zirconium oxide, or hafnium oxide) has excellent alkali resistance. Therefore, in a case where an alkaline liquid permeates into the liquid-repellent layer 52 provided on the jetting surface of the nozzle substrate, due to long-term use, the presence of the interlayer 51 makes it possible to maintain the alkali resistance of the jetting surface.

A layer containing at least one selected from the group consisting of SiO₂, SiC, SiN, SiCN, and SiON (preferably, an SiO₂ layer) has high adhesiveness to the liquid-repellent layer 52. Therefore, the alkaline liquid is less likely to permeate into the liquid-repellent layer 52, and thus the alkali resistance of the jetting surface is excellent.

A thickness of the interlayer 51 is preferably 0.3 nm to 100 nm and more preferably 0.5 nm to 50 nm.

In a case where the thickness of the interlayer 51 is 100 nm or less, a stress of the film is not excessively large, and cracks are less likely to occur.

In a case where the thickness of the interlayer 51 is 0.3 nm or more, the film is likely to be homogeneous, and the adhesiveness to the liquid-repellent layer is improved.

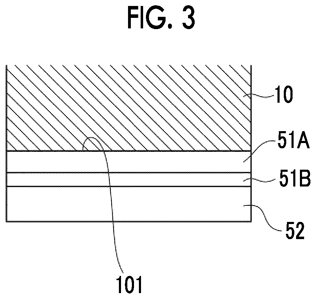

From the viewpoint of further improving the wipe resistance and the alkali resistance of the jetting surface, as shown in Fig. 3, it is preferable that the interlayer 51 consists of two layers, and the jetting surface 101 of the nozzle substrate 10 has a first interlayer 51A, a second interlayer 51B, and the liquid-repellent layer 52 in this order.

The first interlayer 51A is preferably a layer containing at least one selected from the group consisting of tantalum oxide, zirconium oxide, titanium oxide, and hafnium oxide, and more preferably a layer of tantalum oxide, zirconium oxide, or hafnium oxide.

At least one selected from the group consisting of tantalum oxide, zirconium oxide, titanium oxide, and hafnium oxide (preferably, tantalum oxide, zirconium oxide, or hafnium oxide) has excellent alkali resistance. Therefore, in a case where an alkaline liquid permeates into the liquid-repellent layer 52 and the second interlayer 51B provided on the jetting surface of the nozzle substrate, due to long-term use, the presence of the first interlayer 51A makes it possible to maintain the alkali resistance of the jetting surface.

A thickness of the first interlayer 51A is preferably 3 nm to 70 nm, more preferably 10 nm to 50 nm, and still more preferably 20 nm to 50 nm. In a case where the thickness of the first interlayer 51A is 3 nm or more, the alkaline liquid is less likely to permeate, and the jetting surface has excellent wipe resistance and alkali resistance. On the other hand, in a case where the thickness of the first interlayer 51A is 70 nm or less, defects are less likely to occur in the layer, and the wipe resistance and the alkali resistance of the jetting surface are more excellent. From the viewpoint of productivity, the thickness of the first interlayer 51A is preferably 50 nm or less.

The second interlayer 51B is preferably a layer containing at least one selected from the group consisting of SiO₂, SiC, SiN, SiCN, and SiON, and more preferably an SiO₂ layer.

A layer containing at least one selected from the group consisting of SiO₂, SiC, SiN, SiCN, and SiON (preferably, an SiO₂ layer) has high adhesiveness to the liquid-repellent layer 52. Therefore, the alkaline liquid is less likely to permeate into the liquid-repellent layer 52 and the second interlayer 51B, and the jetting surface has excellent wipe resistance and alkali resistance.

A thickness of the second interlayer 51B is preferably 0.3 nm to 120 nm, more preferably 0.3 nm to 3 nm or 10 nm to 100 nm, still more preferably 0.3 nm to 3 nm, and particularly preferably 0.5 nm to 2 nm. In particular, in a case where the thickness of the second interlayer 51B is 0.3 nm to 3 nm or 10 nm to 100 nm, adhesiveness between the second interlayer 51B and the liquid-repellent layer 52 is enhanced, and the jetting surface has excellent wipe resistance and alkali resistance.

The liquid-repellent layer 52 is preferably a layer having a contact angle of 60° or more with respect to water. The contact angle of the liquid-repellent layer 52 with respect to water is more preferably 70° or more, and still more preferably 80° or more. Since the liquid-repellent layer 52 is provided on the outermost surface of the nozzle substrate 10, the jetting surface has excellent wipe resistance.

The liquid-repellent layer 52 contains a compound having a hydrocarbon group having 8 or more carbon atoms (hereinafter, also referred to as "specific compound").

In a case where the hydrocarbon group contained in the specific compound has 8 or more carbon atoms, hydrocarbon groups are aggregated, and thus the durability of the liquid-repellent layer is improved.

From the viewpoint of improving the durability of the liquid-repellent layer by further aggregating the hydrocarbon groups, the number of carbon atoms in the hydrocarbon group contained in the specific compound is preferably 10 or more, and more preferably 18 or more. The upper limit value of the number of carbon atoms is not particularly limited, but from the viewpoint of ease of film formation, it is preferably 40 or less, more preferably 30 or less, and still more preferably 22 or less.

The hydrocarbon group contained in the specific compound may be an aliphatic hydrocarbon group or an aromatic hydrocarbon group.

In addition, the hydrocarbon group may be a monovalent hydrocarbon group or a divalent hydrocarbon group.

Among these, the hydrocarbon group is preferably an aliphatic hydrocarbon group, and more preferably an alkyl group. The alkyl group may be any of a linear alkyl group, a branched alkyl group, or a cyclic alkyl group.

From the viewpoint of improving the durability of the liquid-repellent layer by further aggregating the hydrocarbon groups, the hydrocarbon group having 8 or more carbon atoms is preferably a linear alkyl group having 8 or more carbon atoms.

The specific compound has a hydrocarbon group having 8 or more carbon atoms, and a structure other than the hydrocarbon group having 8 or more carbon atoms is not particularly limited; but from the viewpoint of liquid repellency, it is preferable to contain a silicon atom.

Specifically, the specific compound preferably has a partial structure represented by Formula (1).

L-Y-M-* ... (1)

In Formula (1),
L is a hydrocarbon group having 8 or more carbon atoms,
Y is a single bond or a divalent linking group,
M is a metalloid or a metal, and
* means a bonding position to another structure.

A preferred aspect of the hydrocarbon group having 8 or more carbon atoms, represented by L, is as described above.

Examples of the divalent linking group represented by Y include a combination of at least one selected from the group consisting of -O-, -C(=O)-, and -NR- and a hydrocarbon group.
R represents a hydrogen atom or a hydrocarbon group,
However, a linking portion of Y to L is not a hydrocarbon group.

In a case where Y is a divalent linking group, examples of Y include:
*¹-O-C(=O)-(hydrocarbon group)-C(=O)-O-(hydrocarbon group)-*²;
*¹-O-(hydrocarbon group)-O-(hydrocarbon group)-*²;
*¹-C(=O)-NH-(hydrocarbon group)-*²;
*¹-NH-C(=O)-NH-(hydrocarbon group)-*²; and
*¹-O-C(=O)-NH-(hydrocarbon group)-*².
*¹ means a bonding position to L, and *² means a bonding position to M.

The hydrocarbon group contained in the divalent linking group may be an aliphatic hydrocarbon group or an aromatic hydrocarbon group.

Among these, the hydrocarbon group is preferably an aliphatic hydrocarbon group and more preferably an alkylene group. The alkylene group may be any of a linear alkylene group, a branched alkylene group, or a cyclic alkylene group; and is preferably a linear alkylene group.

From the viewpoint of improving the durability of the liquid-repellent layer by further aggregating the hydrocarbon groups, it is preferable that Y is a single bond.

Examples of M include Si, Al, and Ti.

Among these, M is preferably Si.

The liquid-repellent layer 52 is preferably formed using a compound represented by Formula (2).

L-Y-X ... (2)

In Formula (2),
L is a hydrocarbon group having 8 or more carbon atoms,
Y is a single bond or a divalent linking group, and
X is a group which is chemically bondable to the interlayer.

A preferred aspect of the hydrocarbon group having 8 or more carbon atoms, represented by L, is as described above.

A preferred aspect of the divalent linking group represented by Y is as described above. Y is preferably a single bond.

Examples of X include a hydrolyzable silyl group.

The hydrolyzable silyl group is a group having a silicon atom and a hydrolyzable group directly bonded to the silicon atom.

Examples of the hydrolyzable group include a halogen atom, an alkoxy group, and an acyloxy group. The hydrolyzable group is preferably a halogen atom or an alkoxy group, and more preferably an alkoxy group.

Examples of the halogen atom include a chlorine atom, a bromine atom, and an iodine atom, and a chlorine atom is preferable.

The alkoxy group is preferably an alkoxy group having 1 to 6 carbon atoms, and more preferably an alkoxy group having 1 to 3 carbon atoms.

In a case where the hydrolyzable group is an alkoxy group, denseness of the liquid-repellent layer 52 is improved, and thus the alkali resistance is improved.

In particular, the liquid-repellent layer 52 is preferably formed using a compound represented by Formula (2A).

L-Y-Si(X¹)₃ ... (2A)

In Formula (2A),
L is a hydrocarbon group having 8 or more carbon atoms,
Y is a single bond or a divalent linking group, and
X¹'s are each independently a halogen atom or an alkoxy group.

A preferred aspect of the hydrocarbon group having 8 or more carbon atoms, represented by L, is as described above.

A preferred aspect of the divalent linking group represented by Y is as described above. Y is preferably a single bond.

Preferred aspects of the halogen atom and the alkoxy group represented by X¹ are as described above.

From the viewpoint of availability, it is preferable that three X¹'s are the same.

For example, by using the compound represented by Formula (2A), the liquid-repellent layer 52 containing a compound having the partial structure represented by Formula (1) can be obtained.

The liquid-repellent layer 52 may contain a hydrolyzate of the compound represented by Formula (2A).

The hydrolyzate of the compound represented by Formula (2A) has an Si-O-Si bond, and thus the hydrocarbon group having 8 or more carbon atoms is further aggregated, whereby the durability of the liquid-repellent layer 52 is improved.

A thickness of the liquid-repellent layer 52 is preferably 0.5 nm to 10 nm and more preferably 1 nm to 3 nm. In a case where the thickness of the liquid-repellent layer 52 is 3 nm or less, the wipe resistance is improved.

As shown in Figs. 1 and 2, the liquid jetting head 100 has an interlayer 51 on an interior wall 102 of the nozzle 30. The interlayer 51 provided on the interior wall 102 of the nozzle 30 is the same as the interlayer 51 provided on the jetting surface 101 of the nozzle substrate 10.

The interlayer 51 is the outermost layer on the interior wall 102 of the nozzle 30.

It is preferable that the layer formed on the interior wall 102 of the nozzle 30 does not contain a fluorine compound.

### Flow Passage Substrate

The flow passage substrate 20 is, for example, a substrate made of silicon, and may be a single crystal silicon substrate or a polycrystalline silicon substrate. As shown in Fig. 1, the flow passage substrate 20 consists of a wall member 21 and a lid member 22, and it is preferable that the wall member 21 and the lid member 22 are bonded to each other by adhesion or the like. A liquid flow passage 40 communicating with the nozzle 30 is formed in the flow passage substrate 20. The liquid flow passage 40 includes a nozzle communication path 41, a pressure chamber 42, and a liquid supply passage 43.

The nozzle communication path 41 is a flow passage which connects the pressure chamber 42 and the nozzle 30. The nozzle communication path 41 is preferably linear in a cross-sectional view.

The pressure chamber 42 is a flow passage in which a volume changes due to application of a driving voltage. For example, the pressure chamber 42 has a substantially square shape in a plan view of the liquid jetting head 100, an outflow port for the liquid to the nozzle communication path 41 is provided at one of both corner portions on a diagonal line, and the liquid supply passage 43 which is a liquid inflow port is provided at the other corner portion. A planar shape of the pressure chamber 42 is not limited to the substantially square shape, and may be a rectangular shape, a trapezoidal shape, or the like.

The liquid supply passage 43 is a flow passage which is connected to a liquid tank (not shown) in a case where the liquid jetting head 100 is incorporated into the liquid jetting device described later. A liquid is supplied from the liquid tank to the pressure chamber 42 through the liquid supply passage 43. In addition, arrows in the drawings indicate a direction in which the liquid flows.

The liquid tank (not shown) and the liquid jetting head 100 are connected by, for example, a tube. It is preferable that the tube does not contain a fluorine compound.

The liquid jetting head 100 has an interlayer 51 on an interior wall 201 of the liquid flow passage 40 in the same manner as the interior wall 102 of the nozzle 30 shown in Fig. 1. The interlayer 51 provided on the interior wall 201 of the liquid flow passage 40 is the same as the interlayer 51 provided on the jetting surface 101 of the nozzle substrate 10. Specifically, the interior wall 201 of the liquid flow passage 40 has a surface of the wall member 21 on which the liquid flow passage 40 is formed, a surface of the lid member 22 on which the liquid flow passage 40 is formed, and a surface of the nozzle substrate 10 on which the liquid flow passage 40 is formed.

The interlayer 51 is the outermost layer on the interior wall 201 of the liquid flow passage 40.

It is preferable that the layer formed on the interior wall 201 of the liquid flow passage 40 does not contain a fluorine compound.

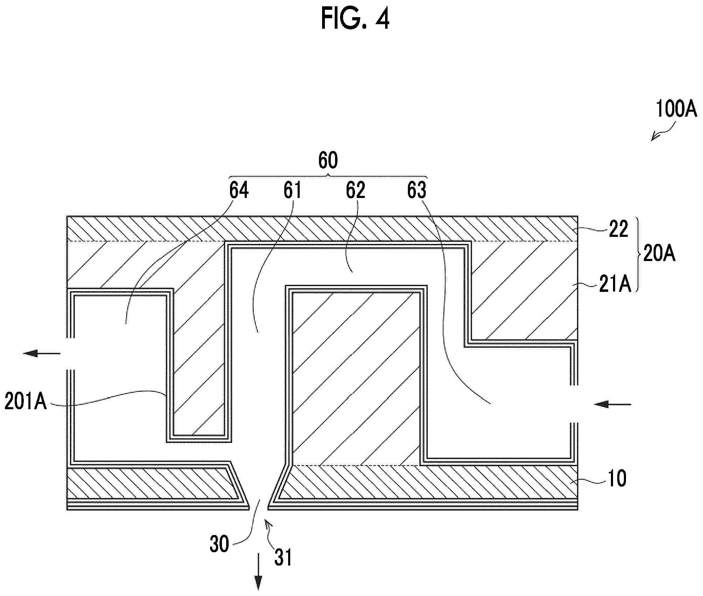

The structure of the flow passage substrate 20 may be, for example, a structure shown in Fig. 4, in addition to the structure shown in Fig. 1. Fig. 4 shows an example in which the interlayer 51 consists of two layers of the first interlayer 51A and the second interlayer 51B.

Fig. 4 is a schematic cross-sectional view showing a modification example of the liquid jetting head according to the present disclosure.

As shown in Fig. 4, a liquid jetting head 100A includes a nozzle substrate 10 and a flow passage substrate 20A in which a liquid flow passage 60 communicating with a nozzle 30 is formed. The configuration of the nozzle substrate 10 is as described above. The liquid flow passage 60 includes a nozzle communication path 61, a pressure chamber 62, a liquid supply passage 63, and a circulation flow passage 64.

The nozzle communication path 61 is the same as the nozzle communication path 41 described above, and is a flow passage which connects the pressure chamber 62 and the nozzle 30.

The pressure chamber 62 is the same as the pressure chamber 42 described above, and is a flow passage in which a volume changes due to application of a driving voltage.

The liquid supply passage 63 is the same as the liquid supply passage 43 described above, and is a flow passage which is connected to a liquid tank (not shown) in a case where the liquid jetting head 100A is incorporated into the liquid jetting device described later. A liquid is supplied from the liquid tank to the pressure chamber 62 through the liquid supply passage 63.

The circulation flow passage 64 is a flow passage which is connected to a liquid tank (not shown) in a case where the liquid jetting head 100A is incorporated into the liquid jetting device described later. The liquid is sent to the nozzle 30 through the liquid supply passage 63, the pressure chamber 62, and the nozzle communication path 61; and the liquid which is not jetted from the nozzle opening 31 of the nozzle 30 is collected in the liquid tank through the circulation flow passage 64.

The liquid jetting head 100A has an interlayer 51 on an interior wall 201A of the liquid flow passage 60 in the same manner as the interior wall 201 of the liquid flow passage 40. The interlayer 51 provided on the interior wall 201A of the liquid flow passage 60 is the same as the interlayer 51 provided on the interior wall 201 of the liquid flow passage 40.

### Layer Forming Method

Next, a method of forming the first interlayer 51A, the second interlayer 51B, and the liquid-repellent layer 52 on the nozzle substrate 10, the nozzle 30, and the flow passage substrate 20 will be described. It is preferable that the first interlayer 51A, the second interlayer 51B, and the liquid-repellent layer 52 are formed after the nozzle substrate 10 and the flow passage substrate 20 are bonded to each other to obtain a bonded body. In addition, even in a case where the interlayer is only one layer, the interlayer can be formed by the same method as in the case of two layers.

The method of forming the interlayer is not particularly limited, and may be an atomic layer deposition (ALD) method or a chemical vapor deposition (CVD) method.

In addition, the interlayer may be formed by film formation by sputtering. In a case of the film formation by sputtering, it is preferable that the interlayer is individually formed on the nozzle substrate 10 and the flow passage substrate 20, and then the nozzle substrate 10 and the flow passage substrate 20 are bonded to each other.

First, before the first interlayer 51A is formed on the surface of the bonded body of the nozzle substrate 10 and the flow passage substrate 20, it is preferable to perform a surface treatment on the surface of the bonded body in advance. Examples of the surface treatment include a UV ozone treatment and an oxygen plasma treatment. Among these, from the viewpoint of improving the adhesiveness between the bonded body and the first layer, the surface treatment is preferably an oxygen plasma treatment. Irradiation conditions of the oxygen plasma can be appropriately adjusted, and for example, the irradiation is performed under conditions of an output of 100 W to 200 W, a flow rate of 50 mL/min to 200 mL/min, and an irradiation time of 1 minute to 10 minutes.

Next, the first interlayer 51A is formed on the surface of the surface-treated bonded body. Specifically, the first interlayer 51A is formed on the jetting surface 101 of the nozzle substrate 10, the interior wall 102 of the nozzle 30, and the interior wall 201 of the liquid flow passage 40.

It is preferable that the first interlayer 51A is formed by an atomic layer deposition (ALD) method. As the ALD method, a generally known method can be adopted. In a case where the ALD method is used, a dense layer is formed, and thus the effect of suppressing the permeation of an alkaline liquid is high.

The first interlayer 51A can be formed by, for example, repeatedly performing four steps of a step of disposing the surface-treated bonded body in an ALD chamber, a step of introducing an H₂O gas and then introducing a precursor gas, a step of exhausting the surplus gas and then introducing an H₂O gas, and a step of exhausting the surplus gas.

First, by introducing the H₂O gas, a hydroxyl group is formed on the surface of the bonded body. Next, the precursor gas is introduced to react the hydroxyl group formed on the surface of the bonded body with the precursor. Furthermore, the precursor which has reacted with the hydroxyl group reacts with H₂O by introducing the H₂O gas.

Examples of a precursor used in a case of forming a tantalum oxide layer as the first interlayer 51A include tert-butylimino(tri(diethylamino))tantalum (TBTDET), tert-butylimino(tri(dimethylamino))tantalum (TBTDMT), tert-butylimino(tri(ethylmethylamino))tantalum (TBTEMT), ethylimino(tri(diethylamino))tantalum (EITDET), ethylimino(tri(dimethylamino))tantalum (EITDMT), ethylimino(tri(ethylmethylamino))tantalum (EITEMT), tert-amylimino(tri(dimethylamino))tantalum (TAIMAT), tert-amylimino(tri(diethylamino))tantalum, pentakis(dimethylamino)tantalum, and tert-amylimino(tri(ethylmethylamino))tantalum.

Examples of a precursor used in a case of forming a zirconium oxide layer as the first interlayer 51A include tetrakis(N-ethylmethylamino)zirconium (TEMAZ) and tris(dimethylamino)cyclopentadienylzirconium (ZAC).

Examples of a precursor used in a case of forming a titanium oxide layer as the first interlayer 51A include tetrakis(dimethylamino)titanium (TDMAT), tetrakis(diethylamino)titanium (TDEAT), and tetrakis(ethylmethylamino)titanium (TEMAT).

Examples of a precursor used in a case of forming a hafnium oxide layer as the first interlayer 51A include tetrakis(dimethylamino)hafnium (TDMAHf), tetrakis(diethylamino)hafnium (TDEAHf), and tetrakis(ethylmethylamino)hafnium (TEMAHf).

In addition, in a case of forming the first interlayer 51A, an ozone gas may be used instead of the H₂O gas.

Next, the second interlayer 51B is formed on the first interlayer 51A.

The method of forming the second interlayer 51B is not particularly limited, and examples thereof include a chemical vapor deposition (CVD) method. As the CVD method, a generally known method can be adopted. It is more preferable that the second interlayer 51B is formed by an atomic layer deposition (ALD) method. As the ALD method, a generally known method can be adopted. In a case where the ALD method is used, a dense layer is formed, and thus the effect of suppressing the permeation of an alkaline liquid is high.

Next, the liquid-repellent layer 52 is formed on the second interlayer 51B.

The method of forming the liquid-repellent layer 52 is not particularly limited, and it is preferable that, after performing a hydrophilic treatment on the surface of the second interlayer 51B, the liquid-repellent layer 52 is formed by a vapor deposition method using a composition for forming a liquid-repellent layer, which contains a compound having a hydrocarbon group having 8 or more carbon atoms.

Examples of the composition for forming a liquid-repellent layer include a silane coupling agent (for example, the above-described compound represented by Formula (2A)). Since the silane coupling agent is hydrolyzed and then bonded to the hydrophilic group formed on the surface of the second interlayer 51B, the adhesiveness between the liquid-repellent layer 52 and the second interlayer 51B is high, and thus the alkaline liquid is suppressed from permeating.

Examples of the hydrophilization treatment include a UV ozone treatment and an oxygen plasma treatment. Among these, the hydrophilization treatment is preferably an oxygen plasma treatment. Irradiation conditions can be appropriately adjusted, and for example, the irradiation is performed under conditions of an output of 100 W to 200 W, a flow rate of 50 mL/min to 200 mL/min, and an irradiation time of 1 minute to 10 minutes.

The film forming method by a vapor deposition method can be performed, for example, by disposing the bonded body in which the first interlayer 51A and the second interlayer 51B are laminated in a vacuum chamber and putting a silane coupling agent in a vapor deposition boat. A vapor deposition temperature is preferably 100°C to 300°C.

In addition, in order to further improve the adhesiveness between the second interlayer 51B and the liquid-repellent layer 52, it is preferable that the bonded body in which the first interlayer 51A, the second interlayer 51B, and the liquid-repellent layer 52 are laminated is held in a high temperature and high humidity environment after the film formation. For example, the bonded body in which the first interlayer 51A, the second interlayer 51B, and the liquid-repellent layer 52 are laminated is held at a temperature of 50°C to 90°C and a relative humidity of 50% to 90% for 6 hours to 24 hours.

Next, the liquid-repellent layer 52 provided on the interior wall 102 of the nozzle 30 and the interior wall 201 of the liquid flow passage 40 is removed.

For example, by bonding a tape to the surface of the liquid-repellent layer 52 provided on the jetting surface of the nozzle substrate 10 and performing an oxygen plasma treatment on the nozzle 30 and the liquid flow passage 40, the liquid-repellent layer 52 provided on the interior wall 102 of the nozzle 30 and the interior wall 201 of the liquid flow passage 40 can be removed.

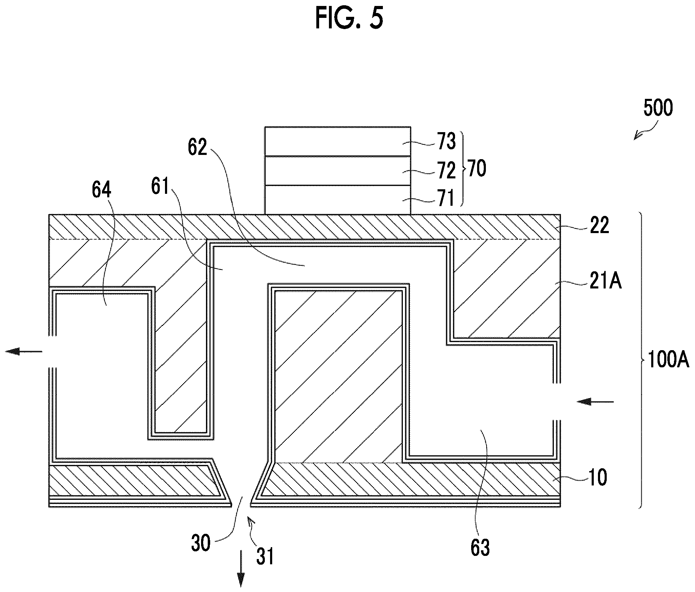

Fig. 5 is a cross-sectional view showing another embodiment of the liquid jetting head according to the present disclosure.

As shown in Fig. 5, with respect to the liquid jetting head 100A, a liquid jetting head 500 further includes a piezoelectric element 70.

The configuration of the liquid jetting head 100A is as described above. The lid member 22 in the liquid jetting head 100A functions as a vibration plate in the liquid jet head 500.

The piezoelectric element 70 having a laminated structure of a lower electrode 71, a piezoelectric layer 72, and an upper electrode 73 is disposed on the lid member (vibration plate) 22. The piezoelectric element 70 is provided at an upper portion of the pressure chamber 62.

The upper electrode 73 is an individual electrode which is patterned to correspond to the shape of the pressure chamber 62. In a case where a driving voltage is applied to the upper electrode 73 of the piezoelectric element 70 provided in the upper portion of the pressure chamber 62 in accordance with input data, the piezoelectric element 70 and the lid member (vibration plate) 22 are deformed, and the volume of the pressure chamber 62 is changed. The liquid is jetted from the nozzle opening 31 of the nozzle 30 through the nozzle communication path 61 due to the change in pressure of the pressure chamber 62.

Instead of the piezoelectric element, a heater may be provided inside the pressure chamber 62 as a pressure generation element, the heater may be heated by supplying a driving voltage to the heater, and the liquid in the pressure chamber 62 may be jetted from the nozzle opening 31 by a film boiling phenomenon.

### Liquid Jetting Device

The liquid jetting device according to the present disclosure includes the liquid jetting head, a transport unit transporting a base material, and a drying unit drying a liquid jetted onto the base material. Hereinafter, an ink jet recording device, which is an example of the liquid jetting device, will be described.

The ink jet recording device includes, for example, a plurality of ink jet heads (examples of the liquid jetting heads) provided for each color of ink; an ink storage portion which stores ink to be supplied to each ink jet head; a paper feed portion which feeds a base material (recording paper); a decal treatment portion which removes a curl of the recording paper; a transport portion which is disposed to face a jetting surface of each ink jet head and transports the recording paper; a drying portion which dries a liquid (specifically, ink) jetted onto the recording paper; an image detection portion which reads an image recording result; and a paper discharge portion which discharges an image recorded material to the outside.

Each configuration other than the ink jet head, provided in the inkjet recording device, is the same as the configuration known in the related art, and for example, WO2017/073526A and JP2022-049414A can be referred to.

It is preferable that the liquid jetting device according to the present disclosure has a liquid circulation mechanism which circulates the liquid between the liquid jetting head and the liquid tank. For example, by using a liquid jetting device including the liquid jetting head 100A shown in Fig. 4, the liquid can be circulated between the liquid jetting head and the liquid tank.

### Manufacturing Method of Liquid Jetting Structure Body

In the manufacturing method of a liquid jetting structure body according to the present disclosure, a liquid-repellent layer is formed on a jetting surface of a nozzle substrate on which a nozzle jetting a liquid is formed using a composition for forming a liquid-repellent layer, containing a compound having a hydrocarbon group having 8 or more carbon atoms, by a vapor deposition method.

Details of the nozzle substrate are as described above.

The method of forming the liquid-repellent layer by a vapor deposition method is as described above.

By forming the liquid-repellent layer by a vapor deposition method, it is possible to manufacture a liquid jetting structure body having excellent wipe resistance.

### Laminate

The laminate according to the present disclosure includes a substrate and a liquid-repellent layer disposed on the substrate, in which the liquid-repellent layer contains a compound having a hydrocarbon group having 8 or more carbon atoms.

A preferred aspect of the substrate is the same as the preferred aspect of the nozzle substrate described above. An interlayer and the liquid-repellent layer may be laminated on the substrate in this order.

The laminate according to the present disclosure is useful for a liquid jetting structure body having a jetting surface with excellent wipe resistance. By forming a nozzle jetting a liquid, the laminate according to the present disclosure can be applied to the liquid jetting structure body.

### Examples

Hereinafter, Examples according to the present disclosure will be described, but the present disclosure is not limited to Examples below.

### Examples 1 to 8 and Comparative Example 1

### Formation of First Interlayer

A nozzle substrate on which a nozzle was formed and a flow passage substrate on which a liquid flow passage was formed were bonded to each other to prepare a bonded body having a size of 25 mm × 35 mm and having the same structure as that shown in Fig. 4.

### Step (a1): Surface treatment

The bonded body was disposed in a vacuum chamber. After the inside of the vacuum chamber was vacuumed, the inside of the vacuum chamber was replaced with oxygen to generate oxygen plasma. Irradiation conditions of the oxygen plasma were set to an output of 30 W, a flow rate of 100 mL/min, and an irradiation time of 30 seconds.

### Step (b1): Formation of hafnium oxide layer

Next, the bonded body after the step (a1) was disposed in an atomic layer deposition (ALD) chamber, and H₂O gas was introduced to form a hydroxyl group on the surface of the bonded body. Next, a tetrakis(dimethylamino)hafnium (TDMAHf) gas was introduced, and the hydroxyl group formed on the surface of the bonded body was reacted with the TDMAHf. Thereafter, the surplus gas was discharged. Next, H₂O gas was introduced to react the TDMAHf bonded to the hydroxyl group in the above reaction with H₂O. Thereafter, the surplus gas was discharged. Next, the introduction of the TDMAHf gas, discharge, introduction of the H₂O gas, and discharge were repeated as one cycle until a predetermined thickness (30 nm) was obtained, thereby forming a hafnium oxide layer.

### Formation of Second Interlayer

### Step (c1): Film formation of silicon oxide

The bonded body after the step (b1) was disposed in an atomic layer deposition (ALD) chamber, and H₂O gas was introduced to form a hydroxyl group on the surface of the bonded body. Next, a tris(dimethylamino)silane (TDMAS) gas was introduced, and the hydroxyl group formed on the surface of the bonded body was reacted with the TDMAS. Thereafter, the surplus gas was discharged. Next, H₂O gas was introduced to react the TDMAS bonded to the hydroxyl group in the above reaction with H₂O. Thereafter, the surplus gas was discharged. Next, the introduction of the TDMAS gas, discharge, introduction of the H₂O gas, and discharge were repeated as one cycle until a predetermined thickness (30 nm) was obtained, thereby forming a silicon oxide layer.

### Formation of Liquid-repellent Layer

### Step (d1): Hydrophilization treatment

Next, the bonded body after the step (c1) was disposed in a vacuum chamber. After the inside of the vacuum chamber was vacuumed, the inside of the vacuum chamber was replaced with oxygen to generate oxygen plasma. Irradiation conditions of the oxygen plasma were set to an output of 100 W, a flow rate of 100 mL/min, and an irradiation time of 1 minute.

### Step (e1): Vapor deposition of silane coupling agent

Next, the bonded body after the step (d1) was disposed in a vapor deposition machine chamber. The silane coupling agent shown in Table 1 was added to a tungsten boat.

In a case where a temperature of the tungsten boat reached 70°C, a shutter was opened, and while monitoring the film thickness with a crystal oscillator, the shutter was closed in a case where the film thickness reached 3 nm, and the silane coupling agent was vapor-deposited.

### Step (f1): Storage in high-temperature and high-humidity environment

Next, in order to promote the hydrolysis reaction of the silane coupling agent and the condensation reaction between the bonded body after the step (e1) and the silane coupling agent, the bonded body was left to stand in an environment of a temperature of 60°C and a humidity of 90% for 12 hours. A contact angle of the formed liquid-repellent layer with respect to water was 60° or more. The contact angle with respect to water was measured using a fully automatic contact angle meter (product name "DM-701", manufactured by Kyowa Interface Science Co., Ltd.), under a condition of 25°C.

### Step (g1): Removal of liquid-repellent layer formed on interior wall of nozzle and interior wall of liquid flow passage

Next, a tape was attached to the surface of the nozzle substrate in the bonded body after the step (f1), and the nozzle and the liquid flow passage were subjected to an oxygen plasma treatment from a surface of the flow passage substrate opposite to the surface bonded to the nozzle substrate. In this manner, the liquid-repellent layer formed on the interior wall of the nozzle and the interior wall of the liquid flow passage was removed to obtain a liquid jetting structure body.

### Example 9

### Formation of Interlayer

After the step (a1), the step (c1) was performed without performing the step (b1) to form a silicon oxide layer.

### Formation of Liquid-repellent Layer

Thereafter, a liquid jetting structure body was obtained by the same method as in the steps (d1) to (g1) of Example 1.

Details of the silane coupling agents shown in Table 1 are as follows. In Example 8, a compound 1 and a compound 2 were used at a ratio of 1:1 (mass ratio).

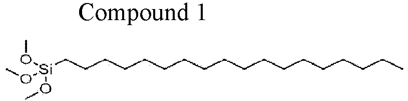

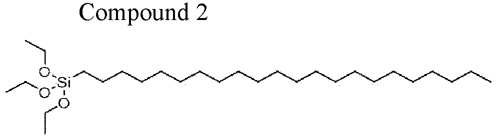

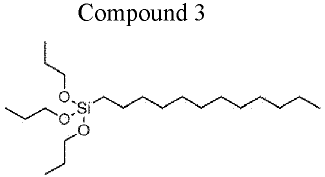

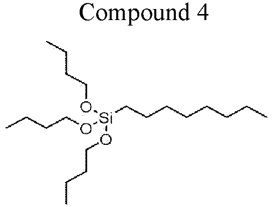

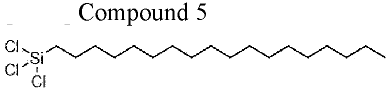

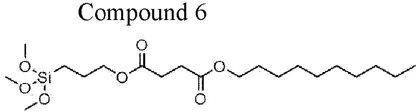

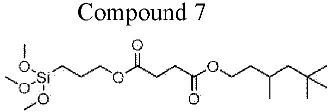

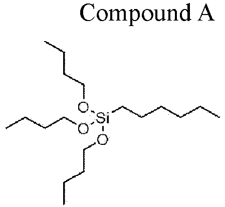

It was confirmed that the liquid-repellent layers in Examples 1 to 9 contained a compound having the partial structure represented by Formula (1).

The obtained liquid jetting structure body was evaluated for liquid repellency of the jetting surface, wipe resistance, and alkali resistance. Evaluation methods were as follows.

### Liquid Repellency

A black ink described in [0272] of JP2015-180710A was prepared. An ink obtained by adding sodium hydroxide to the prepared black ink to adjust a pH to 10 was used as an evaluation ink. A static contact angle of the surface of the liquid jetting structure body was measured using the evaluation ink. The contact angle with respect to the ink was measured using a fully automatic contact angle meter (product name "DM-701", manufactured by Kyowa Interface Science Co., Ltd.), under a condition of 25°C.

The evaluation standard was as follows. As the contact angle is larger, the liquid repellency is better.
A: contact angle was 60° or more and less than 90°.
B: contact angle was 55° or more and less than 60°.
C: contact angle was 50° or more and less than 55°.
D: contact angle was less than 50°.

### Wipe Resistance

First, a static contact angle of the surface of the liquid jetting structure body was measured using the evaluation ink. The contact angle with respect to the ink was measured using a fully automatic contact angle meter (product name "DM-701", manufactured by Kyowa Interface Science Co., Ltd.), under a condition of 25°C.

This contact angle was defined as "contact angle before wiping".

Next, the evaluation ink was added dropwise to a wiping member (product name "TORAYSEE", manufactured by Toray Industries, Inc.). The surface of the nozzle substrate in the produced liquid jetting structure body was pressed against the dropped surface at a constant pressure of 40 kPa and reciprocally slid. After reciprocating sliding 10,000 times, a static contact angle on the surface of the nozzle substrate was measured using a newly prepared evaluation ink.

This contact angle was defined as "contact angle after wiping".

Using the contact angle before wiping and the contact angle after wiping, a rate of change in contact angle was calculated based on the following expression.

Rate of change in contact angle (%) = {(Contact angle before wiping - Contact angle after wiping)/Contact angle before wiping} × 100The evaluation standard was as follows. As the rate of change in contact angle is smaller, the wipe resistance is better.
A: rate of change in contact angle was less than 20%.
B: rate of change in contact angle was 20% or more and less than 30%.
C: rate of change in contact angle was 30% or more and less than 40%.
D: rate of change in contact angle was 40% or more.

### Alkali Resistance

First, a static contact angle of the surface of the liquid jetting structure body was measured using the evaluation ink. The contact angle with respect to the ink was measured using a fully automatic contact angle meter (product name "DM-701", manufactured by Kyowa Interface Science Co., Ltd.), under a condition of 25°C.

This contact angle was defined as "contact angle before immersion".

Next, the produced liquid jetting structure body was immersed in the evaluation ink and allowed to stand in a constant-temperature tank set to 60°C. After 200 hours, a static contact angle on the surface of the nozzle substrate was measured using a newly prepared evaluation ink.

This contact angle was defined as "contact angle after immersion".

Using the contact angle before immersion and the contact angle after immersion, a rate of change in contact angle was calculated based on the following expression.

Rate of change in contact angle (%) = {(Contact angle before immersion - Contact angle after immersion)/Contact angle before immersion} × 100The evaluation standard was as follows. As the rate of change in contact angle is smaller, the alkali resistance is better.
A: rate of change in contact angle was less than 20%.
B: rate of change in contact angle was 20% or more and less than 30%.
C: rate of change in contact angle was 30% or more and less than 40%.
D: rate of change in contact angle was 40% or more.

The evaluation results are shown in Table 1. Table 1 shows the number of carbon atoms in the hydrocarbon group and the type of the compound contained in the liquid-repellent layer. In addition, a case where the compound contained in the liquid-repellent layer contained a linking group in addition to the hydrocarbon group is indicated as "Y", and a case where the compound did not contain a linking group is indicated as "N".

**[Table 1]**

| | | | | | | | | | | | |
|---|---|---|---|---|---|---|---|---|---|---|---|
| Liquid-repellent layer | | Example 1 | Example 2 | Example 3 | Example 4 | Example 5 | Example 6 | Example 7 | Example 8 | Example 9 | Comparative Example 1 |
| | Silane coupling agent | Compound 1 | Compound 2 | Compound 3 | Compound 4 | Compound 5 | Compound 6 | Compound 7 | Compound 1 Compound 2 | Compound 1 | Compound A |
| | Number of carbon atoms in hydrocarbon group | 18 | 22 | 12 | 8 | 18 | 10 | 9 | 18 22 | 18 | 6 |
| | Type of hydrocarbon group | Linear alkyl group | Linear alkyl group | Linear alkyl group | Linear alkyl group | Linear alkyl group | Linear alkyl group | Branched alkyl group | Linear alkyl group | Linear alkyl group | Linear alkyl group |
| | Linking group | N | N | N | N | N | Y | Y | N | N | N |
| Interlayer | | Two layers | Two layers | Two layers | Two layers | Two layers | Two layers | Two layers | Two layers | One layer | Two layers |
| Evaluation | Liquid repellency | A | A | A | A | A | B | A | A | A | C |
| | Wipe resistance | A | A | B | B | A | A | C | A | B | D |
| | Alkali resistance | A | A | A | A | B | A | A | A | C | B |

As shown in Table 1, in Examples 1 to 9, it was found that, since the liquid-repellent layer contained the compound having a hydrocarbon group having 8 or more carbon atoms, the jetting surface had excellent wipe resistance.

On the other hand, in Comparative Example 1, it was found that the liquid-repellent layer did not contain the compound having a hydrocarbon group having 8 or more carbon atoms, and the jetting surface had deteriorated wipe resistance.

### Explanation of References

10: nozzle substrate
20, 20A: flow passage substrate
30: nozzle
31: nozzle opening
21, 21A: wall member
22: lid member (vibration plate)
40, 60: liquid flow passage
41, 61: nozzle communication path
42, 62: pressure chamber
43, 63: liquid supply passage
51: interlayer
51A: first interlayer
51B: second interlayer
52: liquid-repellent layer
64: circulation flow passage
70: piezoelectric element
71: lower electrode
72: piezoelectric layer
73: upper electrode
100, 100A: liquid jetting head
101: jetting surface
102, 201, 201A: interior wall
500: liquid jetting head

## Claims

1. A liquid jetting structure body comprising:
a nozzle substrate on which a nozzle jetting a liquid is formed,
wherein a liquid-repellent layer is provided on a jetting surface of the nozzle substrate, and
the liquid-repellent layer contains a compound having a hydrocarbon group having 8 or more carbon atoms.

2. The liquid jetting structure body according to claim 1,
wherein the compound having a hydrocarbon group having 8 or more carbon atoms has a partial structure represented by Formula (1),
L-Y-M-* ... (1)
in Formula (1),
L is a hydrocarbon group having 8 or more carbon atoms,
Y is a single bond or a divalent linking group,
M is a metalloid or a metal, and
* means a bonding position to another structure.

3. The liquid jetting structure body according to claim 1,
wherein the hydrocarbon group having 8 or more carbon atoms is a linear alkyl group having 8 or more carbon atoms.

4. The liquid jetting structure body according to claim 2,
wherein Y in Formula (1) is a single bond.

5. The liquid jetting structure body according to claim 1,
wherein an interlayer and the liquid-repellent layer are provided in this order on the jetting surface of the nozzle substrate.

6. The liquid jetting structure body according to claim 5,
wherein the interlayer is a layer containing at least one selected from the group consisting of tantalum oxide, zirconium oxide, titanium oxide, hafnium oxide, SiO₂, SiC, SiN, SiCN, and SiON.

7. The liquid jetting structure body according to claim 5,
wherein the interlayer consists of two layers, and
a first interlayer, a second interlayer, and the liquid-repellent layer are provided in this order on the jetting surface.

8. The liquid jetting structure body according to claim 7,
wherein the first interlayer is a layer containing at least one selected from the group consisting of tantalum oxide, zirconium oxide, titanium oxide, and hafnium oxide, and
the second interlayer is a layer containing at least one selected from the group consisting of SiO₂, SiC, SiN, SiCN, and SiON.

9. A liquid jetting head comprising:
the liquid jetting structure body according to any one of claims 1 to 8; and
a flow passage substrate in which a liquid flow passage communicating with the nozzle is formed.

10. The liquid jetting head according to claim 9, further comprising:
a piezoelectric element.

11. A liquid jetting device comprising:
the liquid jetting head according to claim 9;
a transport unit transporting a base material; and
a drying unit drying a liquid jetted onto the base material.

12. A manufacturing method of a liquid jetting structure body, comprising:
forming a liquid-repellent layer on a jetting surface of a nozzle substrate on which a nozzle jetting a liquid is formed using a composition for forming a liquid-repellent layer, containing a compound having a hydrocarbon group having 8 or more carbon atoms, by a vapor deposition method.

13. A laminate comprising:
a substrate; and
a liquid-repellent layer disposed on the substrate,
wherein the liquid-repellent layer contains a compound having a hydrocarbon group having 8 or more carbon atoms.
